# EUROPEAN PATENT APPLICATION

(11) **EP 4 236 156 A1**
(43) Date of publication of application: **30.08.2023**
(21) Application number: 21884883.6
(22) Date of filing: 30.09.2021
(51) Int. Cl.: H04L 5/00

(54) **INFORMATION TRANSMISSION METHOD, TERMINAL, NETWORK DEVICE, AND STORAGE MEDIUM**

(30) Priority: 26.10.2020 CN 202011158097
(71) Applicant: Datang Mobile Communications Equipment Co., Ltd., Beijing 100085 (CN)
(72) Inventor: BAI, Wei, Beijing 100085 (CN); SUO, Shiqiang, Beijing 100085 (CN); ZHANG, Yujie, Beijing 100085 (CN)
(74) Representative: Maiwald GmbH
(86) International application number: PCT/CN2021/122234
(87) International publication number: WO 2022/089154

(57) **Abstract**

This disclosure provides an information transmission method, a terminal, a network device and a storage medium. The method includes: transmitting, by a terminal, first information and second information to a network device; wherein the first information is obtained by performing a first processing on control information of second partial user information and first partial user information, the second information is information obtained by performing a second processing on the second partial user information, and a parameter of the second information is determined according to the control information of the second partial user information and/or the first partial user information.

## Description

### CROSS-REFERENCE TO RELATED APPLICATION

The present application claims a priority to the Chinese patent application No. 202011158097.0 filed in China on October 26, 2020, a disclosure of which is incorporated herein by reference in its entirety.

### TECHNICAL FIELD

The present disclosure relates to the field of communications technologies, in particular to an information transmission method, a terminal, a network device and a storage medium.

### BACKGROUND

With the development of communications technologies, the quantity of terminals accessing networks is increasing rapidly. For example, it is predicated by some organizations that the density of terminals accessing networks may reach ten millions terminals per square kilometer in the future. If the mechanism in the related art is adopted to configure for each terminal parameters for transmitting information when the quantity of terminals is huge, excessive resource consumption will result.

### SUMMARY

Embodiments of the present disclosure provide an information transmission method, a terminal, a network device and a storage medium, to solve the problem of excessive resource consumption.

An embodiment of the present disclosure provides an information transmission method, including:
transmitting, by a terminal, first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

Optionally, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

Optionally, coding control information of the second partial user information is determined according to third information, and the third information is obtained by performing a third processing on the control information of the second partial user information and/or the first partial user information.

Optionally, the K data transmitting occasions are determined according to fourth information, and the fourth information is obtained by performing a fourth processing on the control information of the second partial user information and/or the first partial user information.

Optionally, the fourth information is a quantity J of resources used by the terminal for transmission, J being greater than or equal to K, and the fourth information is used for indicating that K resources in the J resources are the K data transmitting occasions.

Optionally, the transmitting, by the terminal, the second information to the network device includes: transmitting, by the terminal, the second information to the network device once or K times.

Optionally, the method further includes: receiving, by the terminal, access configuration information transmitted by the network device, wherein the access configuration information is used for transmitting at least one of the first information or the second information.

An embodiment of the present disclosure further provides an information transmission method, including:
receiving, by a network device, first information transmitted by a terminal, and obtaining, by the network device according to the first information, control information of second partial user information and first partial user information;
receiving, by the network device according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

Optionally, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

Optionally, coding control information of the second partial user information is determined according to third information, and the third information is obtained by performing a third processing on the control information of the second partial user information and/or the first partial user information.

Optionally, the K data transmitting occasions are determined according to fourth information, and the fourth information is obtained by performing a fourth processing on the control information of the second partial user information and/or the first partial user information.

Optionally, the fourth information is a quantity J of resources used by the terminal for transmission, J being greater than or equal to K, and the fourth information is used for indicating that K resources in the J resources are the K data transmitting occasions.

Optionally, the method further includes: transmitting, by the network device, access configuration information to the terminal, wherein the access configuration information is used for transmitting at least one of the first information or the second information.

An embodiment of the present disclosure provides a terminal, including a memory, a transceiver and a processor, wherein, the memory is used for storing a computer program, the transceiver is used for transmitting and receiving data under the control of the processor, the processor is used for reading the computer program in the memory to implement following step:
transmitting first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

An embodiment of the present disclosure further provides a network device, including a memory, a transceiver and a processor, wherein, the memory is used for storing a computer program, the transceiver is used for transmitting and receiving data under the control of the processor, the processor is used for reading the computer program in the memory to implement following steps:
receiving first information transmitted by a terminal, and obtaining, according to the first information, control information of second partial user information and first partial user information;
receiving, according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

An embodiment of the present disclosure further provides a terminal, including:
a transmitting unit, configured to transmit first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

An embodiment of the present disclosure further provides a network device, including:
a first receiving unit, configured to receive first information transmitted by a terminal, and obtain, according to the first information, control information of second partial user information and first partial user information;
a second receiving unit, configured to receive, according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

An embodiment of the present disclosure further provides a processor readable storage medium storing a computer program, wherein the computer program is configured to be executed by a processor, to implement the information transmission method on the terminal side according to the embodiment of the present disclosure, or implement the information transmission method on the network device side according to the embodiment of the present disclosure.

In the embodiments of the present disclosure, the terminal transmits first information and second information to the network device; wherein the first information is obtained by performing a first processing on control information of second partial user information and first partial user information; the second information is information obtained by performing a second processing on the second partial user information, and a parameter of the second information is determined according to the control information of the second partial user information and/or the first partial user information. In this way, since the second information is information obtained by performing the second processing on the second partial user information, and the parameter of the second information is determined according to the control information of the second partial user information and the first partial user information, resource consumption can be reduced.

### BRIEF DESCRIPTION OF THE DRAWINGS

Fig. 1 is a schematic structural diagram of a network architecture to which embodiments of the present disclosure are applicable;
Fig. 2 is a flow diagram of an information transmission method according to an embodiment of the present disclosure;
Fig. 3 is another flow diagram of an information transmission method according to an embodiment of the present disclosure;
Fig. 4 is a structural diagram of a terminal according to an embodiment of the present disclosure;
Fig. 5 is a structural diagram of a network device according to an embodiment of the present disclosure;
Fig. 6 is another structural diagram of a terminal according to an embodiment of the present disclosure;
Fig. 7 is another structural diagram of a network device according to an embodiment of the present disclosure.

### DETAILED DESCRIPTION

In order to make the technical problem, the technical solutions and the advantages of the present disclosure more clear, the present disclosure will be described hereinafter in details in conjunction with the drawings and specific embodiments.

The term "and/or" used herein merely refers to an association relationship between objects to be associated and means there are three relationships. For example, A and/or B may represent: only A exists, both A and B exist, and only B exists. The symbol "f' as used herein generally represents there is a "or" relationship between the objects to be associated.

The term "multiple" used herein refers to two or more, and other quantifiers are similar thereto.

In the following, technical solutions in embodiments of the present disclosure will be described in a clear and complete manner with reference to the drawings related to the embodiments. Obviously, the described embodiments are merely a part of, rather than all of, the embodiments of the present disclosure. Based on the embodiments of the present disclosure, a person skilled in the art may, without any creative effort, obtain other embodiments, which also fall within the scope of the present disclosure.

Embodiments of the present disclosure provide an information transmission method, a terminal, a network device and a storage medium, to solve the problem of excessive resource consumption.

The method and device are based on the same creative concept, and share similar principle to solve the problem. Therefore, for the implementation of one of the method and the device, references may be made to the other of the method and the device. A repeated description is omitted herein.

It is noted, the solution provided by the embodiments of the present disclosure may be applicable to multiple kinds of systems, especially a 6^{th} generation (6G) system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS) system, a worldwide interoperability for microwave access (WiMAX) system, a 5G New Radio (NR) system, a 6G system, or the like. All of the multiple kinds of systems include a terminal device and a network device. The systems may include a core network portion as well, for example, evolved packet system (EPS), 5G system (5GS) or the like.

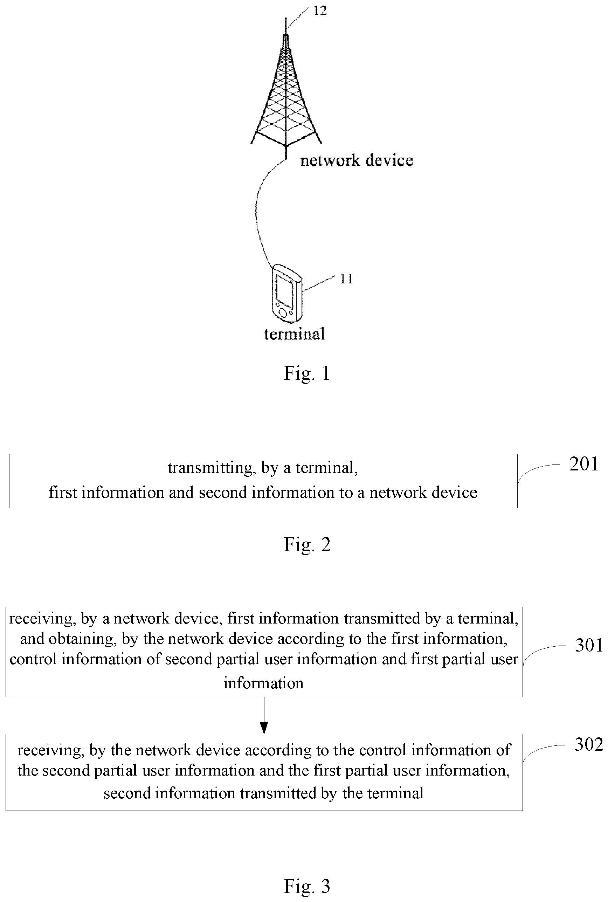

Fig. 1 is a schematic structural diagram of a network architecture to which embodiments of the present disclosure are applicable. As shown in Fig. 1, the network architecture includes a terminal 11 and a network device 12.

The terminal involved in the embodiments of the present disclosure may be a device that provides voice and/or data connectivity to a user, a handheld device with a radio connection function, or other processing devices connected to a radio modem or the like. In different systems, the names of terminal devices may be different. For example, in a 5G system, a terminal device may be called user equipment (UE). Wireless terminal device can communicate with one or more core networks (CNs) via a radio access network (RAN), and wireless terminal device may be mobile terminal device, such as mobile phones (or called "cellular" phones) and computers with mobile terminal device, such as portable, pocket-sized, hand-held, computer built-in or vehicle-mounted mobile apparatuses, which exchange voice and/or data with the radio access network. For example, personal communication service (PCS) phones, cordless phones, session initiated protocol (SIP) phones, wireless local loop (WLL) stations, personal digital assistant (PDA), Redcap terminal and other devices. The wireless terminal device may also be called a system, subscriber unit, subscriber station, mobile station, mobile, remote station, access point, remote terminal, access terminal, user terminal, user agent, and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called other name. The network device may be used for converting the received radio frames into Internet protocol (IP) packets or vice versa, and serves as a router between the wireless terminal devices and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in Long Term Evolution (LTE) system, a 5G base station (gNB) in 5G network architecture (next generation system), a base station in 6G, a home evolved Node B (HeNB), a relay node, a femto, a pico, or the like, which is not limited herein. In some network architectures, the network device may include a centralized unit (CU) node and a distributed unit (DU) node, which may be located geographically separated.

The network device and the terminal device may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be two dimensional-MIMO (2D-MIMO), three dimensional-MIMO (3D-MIMO), full dimensional-MIMO (FD-MIMO) or massive-MIMO, and may be diversity transmission, precoded transmission, beam forming transmission, or the like.

Fig. 2 is a flow diagram of an information transmission method according to an embodiment of the present disclosure. As shown in Fig. 2, the method includes:
step 201, transmitting, by a terminal, first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

The first information and the second information may be transmitted simultaneously, or may be transmitted at different timings, for example, the first information is transmitted first, and then the second information is transmitted, alternatively, the first information and the second information may be transmitted in cascade, the present disclosure is not limited thereto.

The first partial user information and the second partial user information are two parts of the same information. For example, the first p bits ωₚ of one piece of information are taken as the first partial user information, and the remaining c (the total bit count minus p) bits ω_{c} are taken as the second partial user information, p>0.

The first processing may be coding, e.g., a first joint coding, such as compressive sensing coding, ZC sequence mapping or linear block coding. With the compressive sensing coding, excellent decoding performance can be achieved, and it can be used for assisting the decoding of other user information, for example, assisting the decoding of other user information with a code rate of 0.1 or encoded with a newer linear block coding.

The first processing is not limited in the embodiments of the present disclosure, for example, the first processing may be coding the control information of the second partial user information and the first partial user information respectively, and concatenating the coding results, or the first processing may be other processing such as compressing the control information of the second partial user information and the first partial user information.

The second processing may be coding, e.g., channel coding, specifically, the second processing may be coding such as low density parity check code (LDPC) coding or Polar coding. The second processing is not limited in the embodiments of the present disclosure, for example, the second processing may be other processing such as compressing.

That the parameter of the second information is determined according to the control information of the second partial user information and/or the first partial user information may refer to that the parameter of the second information is determined according to at least one of: the control information of the second partial user information, or the first partial user information. For example, a processing is performed on at least one of: the control information of the second partial user information, or the first partial user information, and then the parameter of the second information is determined according to information derived from the processing, e.g., a result of the processing and the first information have a corresponding relationship, and thus the parameter of the second information can be determined according to the corresponding relationship.

In embodiment of the present disclosure, it can be achieved through the aforementioned steps that the second information is information obtained by performing the second processing on the second partial user information, and the parameter of the second information is determined according to the control information of the second partial user information and the first partial user information. In this way, there is no need to configure the parameter of the second information for each terminal individually, thereby resource consumption is reduced.

As an optional implementation, the first partial user information is first partial information in an information combination, and the information combination is a combination of user identity information and user data.

The information combination may be a combination of bits of user identity information and user data.

In this implementation, since the first partial user information is the first partial information in the information combination, a probability that the first partial information of one terminal coincides with the first partial information of another terminal may be reduced, or the first partial user information of different terminals may be prevented from coinciding with one another, such that the parameters of the second information of different terminals differ from one another, thereby effectively reducing inter-terminal interference.

In addition, the length of the first partial user information may correspond to the maximum quantity of active users that the system is capable of accommodate. For example, the first p bits ωₚ of the information combination (identity information + data) are taken as the first partial user information, and the remaining c (the total bit count minus p) bits ω_{c} are taken as the second partial user information, wherein the value of p (which is greater than 0) is determined by the maximum quantity of active users that the system is capable of accommodate. When the quantity of users is enormous, the value of p should be large, whereby the diversity of transmitting occasions can be achieved through a processing on ωₚ, and the possibility that different users use identical transmitting occasions is minimized; when the quantity of users is small, the value of p should be small, so as to ensure that the target performance of ωₚ may be achieved with less resources.

As an optional implementation, the control information of the second partial user information includes at least one of: a quantity of repeated transmissions K, resources for repeated transmissions, or a data format of repeated transmissions.

The control information may be configured by the network side for the terminal, or may be determined by the terminal by itself. For example, the terminal determines the control information according to a result of measuring a reference signal. Specifically, the terminal may measure a synchronization signal block (SSB) or channel state information reference signal (CSI-RS) to obtain synchronization signal reference signal received power (SS-RSRP), synchronization signal reference signal received quality (SS-RSRQ), synchronization signal signal to interference plus noise ratio (SS-SINR), channel state information (CSI) or the like, and determine the control information according to these measurement results.

As an optional implementation, the parameter of the second information includes at least one of: the data format of repeated transmissions, an interleaving mode or K data transmitting occasions, K being equal to the quantity of repeated transmissions.

In this implementation, it may be achieved that at least one of the interleaving mode or the K data transmitting occasions is determined according to the data format of repeated transmissions of the first information. Thus, there is no need to configure the data format of repeated transmissions, the interleaving mode and the K data transmitting occasions for terminals, thereby resource consumption is reduced.

In addition, in this implementation, at least one of the interleaving mode or the K data transmitting occasions may be determined using some or all contents of the control information of the second partial user information and the first partial user information. For example, a through-coding (e.g., linear block coding) is performed on all or some information of the control information of the second partial user information and the first partial user information, and the information derived from the coding represents the interleaving mode. For example, a value of the information derived from the coding (e.g., a codeword outputted by a linear block coding) is equivalent to an index, and the index corresponds to an interleaving mode, e.g., the initial read-out position of an interleaver inputting row-wise and outputting column-wise is determined by the index.

For another example, a through-coding is performed on all or some information of the control information of the second partial user information and the first partial user information, the output of the coding is greater than K bits, and these bits indicate K data transmitting occasions.

In addition, in this implementation, one or more interleaving modes may be encompassed. The coding of the K data transmitting occasions may adopt the same interleaving mode, or different interleaving modes.

As an optional implementation, the second partial user information is second partial information in an information combination, and the information combination is a combination of user identity information and user data.

The information combination may be a combination of bits of user identity information and user data. Additionally, the second partial user information may be information bits other than the first partial user information in the information combination.

In this implementation, since the second partial user information is the second partial information in the information combination, user identity information and user data may be transmitted through the first information and second information to the network device effectively, thereby improving transmission performance of the terminal.

As an optional implementation, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

In this implementation, it may be achieved that the control information of the second partial user information and the first partial user information are scrambled and further added with a CRC code before the first joint coding. In this way, the transmission reliability of the first information is improved.

Further, since puncturing and RV setting may be performed after the first joint coding, the transmission performance of the first information may be further improved.

As an optional implementation, coding control information of the second partial user information is determined according to third information, and the third information is obtained by performing a third processing on the control information of the second partial user information and/or the first partial user information.

The coding control information of the second partial user information may be related information for controlling the coding of the second partial information, e.g., control information such as interleaving mode or code rate.

The third processing may be coding, e.g., a second joint coding. The second joint coding may be different from the aforementioned first joint coding, e.g., the first joint coding and the second joint coding utilize different encoders. Of course, the second joint coding may be the same as the first joint coding in some scenarios. For example, the second joint coding may be compressive sensing coding, ZC sequence mapping, linear block coding, or the like.

That the coding control information of the second partial user information is determined according to third information may refer to that the third information and the coding control information have a corresponding relationship, and the coding control information is determined according to the corresponding relationship.

Optionally, the K data transmitting occasions are determined according to fourth information, and the fourth information is obtained by performing a fourth processing on the control information of the second partial user information and/or the first partial user information.

The fourth processing may be coding, e.g., a third joint coding. The third joint coding may be different from the aforementioned first joint coding and second joint coding, e.g., the first joint coding, the second joint coding and the third joint coding utilize different encoders. Of course, the third joint coding may be identical to the first joint coding and/or the second joint coding in some scenarios. For example, the third joint coding may be compressive sensing coding, ZC sequence mapping, linear block coding, or the like.

That the K data transmitting occasions are determined according to fourth information may refer to that the K data transmitting occasions are indicated by the fourth information.

Optionally, the fourth information is a quantity J of resources used by the terminal for transmission, J being greater than or equal to K, and the fourth information is used for indicating that K resources in the J resources are the K data transmitting occasions.

Through values of bits, the fourth information may indicate that K resources in the J resources are the K data transmitting occasions. For example, the fourth information includes J bits, and each bit corresponds to one resource. Thus, through the values of the J bits, K resources are indicated as K data transmitting occasions. Additionally, the J resources may be pre-configured.

For example, there are J slots in total for the terminal to transmit data, the length of the codeword outputted by the third joint coding is J, and J bits are used for indicating whether each transmitting occasion is used, wherein 1 indicates the transmitting occasion is used, and 0 indicates the transmitting occasion is not used. Then K bits in the J bits of the fourth information are 1, while the remaining bits are 0. Exactly which K bits are 1 is determined by the control information of the second partial user information and the first partial user information, so as to achieve the randomization of transmitting occasions, thereby reducing inter-terminal interference.

As an optional implementation, the transmitting, by the terminal, the second information to the network device includes: transmitting, by the terminal, the second information to the network device once or K times.

The transmitting the second information once may refer to transmitting the second information once in the case that K repeated transmissions are not configured. Of course, in some scenarios, even if K repeated transmissions are configured, K pieces of second information may be concatenated to be transmitted once, wherein the single transmission includes the K pieces of second information.

The transmitting the second information K times may refer to transmitting second information in K data transmitting occasions respectively.

It is noted, in the case that the second information is transmitted K times, the first information may be transmitted once or K times.

As an optional implementation, the method further includes: receiving, by the terminal, access configuration information transmitted by the network device, wherein the access configuration information is used for transmitting at least one of the first information or the second information.

The access configuration information may be massive access configuration information of a cell. The access configuration information may specifically include at least one of: cell configuration information, broadcast information, multicast information, access frame location information, resource location, starting location, resource length, or the like.

In this implementation, since the access configuration information is received, the first information and the second information may be transmitted according to the access configuration information, such that the network device may rapidly receive the first information and the second information.

It is noted, the access configuration information may also be pre-configured.

In the embodiments of the present disclosure, the terminal transmits first information and second information to the network device; wherein the first information is obtained by performing a first processing on control information of second partial user information and first partial user information; the second information is information obtained by performing a second processing on the second partial user information, and a parameter of the second information is determined according to the control information of the second partial user information and/or the first partial user information. In this way, since the second information is information obtained by performing the second processing on the second partial user information, and the parameter of the second information is determined according to the control information of the second partial user information and the first partial user information, resource consumption can be reduced.

Fig. 3 is another flow diagram of an information transmission method according to an embodiment of the present disclosure. As shown in Fig. 3, the method includes:
step 301, receiving, by a network device, first information transmitted by a terminal, and obtaining, by the network device according to the first information, control information of second partial user information and first partial user information;
step 302, receiving, by the network device according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

The obtaining, according to the first information, the control information of second partial user information and the first partial user information may be performing an inverse operation of the first processing on the first information, e.g., performing decoding to obtain the control information of second partial user information and the first partial user information.

The receiving, according to the control information of the second partial user information and the first partial user information, second information transmitted by the terminal may be determining the parameter of the second information according to the control information of the second partial user information and the first partial user information, receiving, according to the parameter, the second information transmitted by the terminal, and then obtaining the second partial information through an inverse operation of the second processing.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

Optionally, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

Optionally, coding control information of the second partial user information is determined according to third information, and the third information is obtained by performing a third processing on the control information of the second partial user information and/or the first partial user information.

Optionally, the K data transmitting occasions are determined according to fourth information, and the fourth information is obtained by performing a fourth processing on the control information of the second partial user information and/or the first partial user information.

Optionally, the fourth information is a quantity J of resources used by the terminal for transmission, J being greater than or equal to K, and the fourth information is used for indicating that K resources in the J resources are the K data transmitting occasions.

Optionally, the method further includes: transmitting, by the network device, access configuration information to the terminal, wherein the access configuration information is used for transmitting at least one of the first information or the second information.

It is noted, this embodiment is an implementation of the corresponding network device in the embodiment shown in Fig. 2, for the specific implementation thereof, reference may be made to the relevant description of the embodiment shown in Fig. 2. In order to avoid repetition, a detailed description is omitted herein. This embodiment can achieve the same beneficial effects as the embodiment shown in Fig. 2.

The method provided in the embodiments of the present disclosure is described by way of example through the following embodiments.

### Embodiment 1

The terminal side behavior is described in this embodiment, and may specifically include the following steps 1 to 12.

Step 1: through a cell search process, downlink synchronization of the terminal is achieved, and the terminal obtains access configuration information.

Step 2: if uplink time synchronization information such as timing advance (TA) can be obtained, the terminal records or updates TA information.

Step 3: the terminal measures SSB/CSI-RS to obtain SS-RSRP/SS-RSRQ/SS-SINR/CSI or the like, and determines a quantity of repeated transmissions K.

If taking determining K based on SS-RSRQ measurements as an example, the step may include:
a table at least including three columns: block error rate (BLER), SINR and the quantity of repetitions K may be obtained by means of physical uplink shared channel (PUSCH) emulation or the like; by looking up the table, it can be concluded that a target BLER performance can be achieved through K repeated transmissions in a certain SINR range; therefore, after SS-RSRQ is measured, the terminal obtains the K by looking up the table according to the target BLER in quality of service (QoS).

Step 4: the terminal takes the first p bits ωₚ of the user information (identity information + data) as the first partial user information, and takes the remaining c (the total bit count minus p) bits ω_{c} as the second partial user information, wherein the value of p (which is greater than 0) is determined by the maximum quantity of active users that the system is capable of accommodate. When the quantity of users is enormous, the value of p should be large, whereby the diversity of transmitting occasions can be achieved through the coding of ωₚ, and the possibility that different users use identical transmitting occasions is minimized; when the quantity of users is small, the value of p should be small, so as to ensure that the target performance of ωₚ may be achieved with less resources.

Step 5: the terminal performs channel coding (e.g., LDPC coding, Polar coding, etc.) on the ω_{c} second partial user information.

Step 6: the terminal performs joint coding 1 on the quantity of repeated transmissions K and the ωₚ first partial user information, to determine the interleaving mode of channel coding, and performs interleaving on the output of the channel coding of ω_{c}.

Step 7: the terminal performs joint coding 2 on the quantity of repeated transmissions K and the ωₚ first partial user information, to determine K data transmitting occasions in one time interval (e.g., one frame) configured by the network.

Step 8: the terminal performs joint coding 3 on the quantity of repeated transmissions K and the ωₚ first partial user information, to obtain the first information. The step may utilize compressive sensing coding, ZC sequence mapping, linear block coding or the like.

Step 9: the terminal performs pre-processing such as modulation on the encoded (or interleaved) data obtained in the step 5 and step 8; the pre-processing includes at least one of MIMO pre-coding, beam forming, power adjustment or the like.

Step 10: the terminal maps the pre-process data of the quantity of repeated transmissions K and the ωₚ first partial user information to a starting position (according to TA) in one time interval for transmission.

Step 11: the terminal maps the pre-process data of the ω_{c} second partial user information to the K data transmitting occasions determined in the step 7 for transmission.

Step 12: the terminal waits for the base station's response; if an acknowledgement message is not received within a predetermined time window, the terminal retransmits, and if the acknowledgement message is received, the transmission process ends.

It is noted, the steps 1, 2, 3, 6, 7 and 9 are optional in this embodiment.

### Embodiment 2

The network device side behavior is described in this embodiment, and may specifically include the following steps 1 to 9.

Step 1: the network device broadcasts/unicasts access configuration information in the cell.

Step 2: the network device detects, at the access resource positions corresponding to the configured access configuration information, the first information resulting from the joint coding 3 of the quantity of repeated transmissions K and the ωₚ first partial user information. Specifically, a non-coherence detection may be performed; the detection of joint coding 3 through non-coherence detection may be performing correlation operation on all possible coding sequences one by one, and the information sequence corresponding to Ka coding sequences with the largest correlation values is the K and ωₚ.

Step 3: the network device obtains the quantity of repeated transmissions K and the ωₚ first partial user information according to the decoded output of the step 2.

Step 4: the network device performs joint coding 1 on the quantity of repeated transmissions K and the ωₚ first partial user information, to obtain K data transmitting occasions in one time interval.

Step 5: the network device performs joint coding 2 on the quantity of repeated transmissions K and the ωₚ first partial user information, to obtain the interleaving mode of channel coding of the ω_{c} second partial information.

Step 6: the network device obtains, using the information of step 4 and step 5 and through iterative decoding and the like, a certain terminal's ω_{c} second partial information.

The LDPC decoding may be joint decoding of K repeated transmissions.

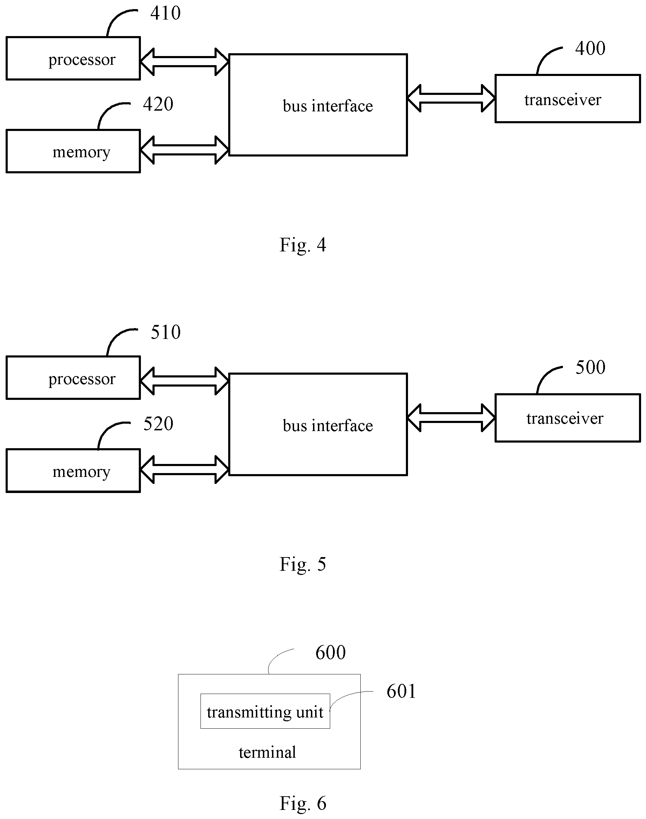

Step 7: the network device performs a joint CRC check on the ωₚ first partial user information and the ω_{c} second partial information; if the CRC check is passed, the network device may perform an interference cancellation operation. As shown in Fig. 4, a pilot sequence may be embedded in b, the configuration of the pilot sequence is determined by the ωₚ first partial user information, and channel estimation may be performed based on the pilot sequence, thereby achieving interference cancellation.

The CRC check may be performed on ω_{c}, ω = (ωₚ, ω_{c}), (K, ω), or other combination of K, ωₚ, ω_{c}.

Step 8: the network device performs the steps 6 and 7 cyclically, to obtain user information of all terminals.

Step 9: the network device transmits an acknowledgement message within a predetermined time window (which is the same as the window on the terminal side) to the terminal passing the CRC check.

It is noted, the steps 1, 4, 5, 7, 8 and 9 are optional in this embodiment.

In the embodiments of the present disclosure, the following may be achieved.

When multiple terminals share a channel, with the introduction of different occupancy time lengths and different occupancy time positions, wherein the occupancy time lengths and different occupancy time positions may be through the control information of the second partial user information and the first partial user information, inter-terminal interference can be reduced effectively, and the detection performance of individual terminal may be improved effectively, while the performance of interference cancellation receiver is improved, that is, the joint detection performance of multiple terminals may be improved. The improvement of interference cancellation performance refers to that different terminals occupy different transmitting occasions, and if the quantity of terminals transmitting simultaneously is small on some transmitting occasions, the detection succeeds relatively easily, then the data of the terminal detected successfully may be deleted from other transmitting occasions, thereby reducing its interference. The solution of contributing transmitting occasions in a possibly staggered manner improves the effect of interference cancellation. If the detection succeeds, the interference cancellation is achieved.

Fig. 4 is a structural diagram of a terminal according to an embodiment of the present disclosure. As shown in Fig. 4, the terminal includes a memory 420, a transceiver 400 and a processor 410, wherein, the memory 420 is used for storing a computer program, the transceiver 400 is used for transmitting and receiving data under the control of the processor 410, the processor 410 is used for reading the computer program in the memory 420 to implement following step:
transmitting first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

In Fig. 4, a bus architecture may include any number of interconnected buses and bridges, and connects various circuits including one or more processors represented by the processor 410 and memory represented by the memory 420. The bus architecture may also connect various other circuits such as peripherals, voltage regulators and power management circuits, which is well known in the art. Therefore, a detailed description thereof is omitted herein. A bus interface provides an interface. The transceiver 400 may be multiple elements, i.e., a transmitter and a receiver, to allow for communication with various other apparatuses on the transmission medium. These transmission media include wireless channel, wired channel, optic fiber or the like. For different user equipment, the user interface 430 may be an interface capable of externally or internally connecting a required device, and the connected device includes, but is not limited to: a keypad, a display, a speaker, a microphone, a joystick and the like.

The processor 410 is responsible for supervising the bus architecture and normal operation and the memory 420 may store the data being used by the processor 410 during operation.

Optionally, the processor 410 may be a central processing unit (CPU), an application specific integrated circuit (ASIC), a field-programmable gate array (FPGA) or a complex programmable logic device (CPLD). The processor may also adopt a multi-core architecture.

The processor invokes a computer program stored in the memory and implements any one method provided in the embodiments of the present disclosure according to the obtained executable instructions. The processor and the memory may also be arranged physically separately.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

Optionally, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

Optionally, coding control information of the second partial user information is determined according to third information, and the third information is obtained by performing a third processing on the control information of the second partial user information and/or the first partial user information.

Optionally, the K data transmitting occasions are determined according to fourth information, and the fourth information is obtained by performing a fourth processing on the control information of the second partial user information and/or the first partial user information.

Optionally, the fourth information is a quantity J of resources used by the terminal for transmission, J being greater than or equal to K, and the fourth information is used for indicating that K resources in the J resources are the K data transmitting occasions.

Optionally, the transmitting the second information to the network device includes: transmitting the second information to the network device once or K times.

Optionally, the processor 410 is further used for reading the computer program in the memory 420 to implement following step: receiving access configuration information transmitted by the network device, wherein the access configuration information is used for transmitting at least one of the first information or the second information.

It is noted, the terminal according to the embodiment of the present disclosure can implement all method steps implemented by the aforementioned method embodiment, and can achieve the same technical effects. A detailed description of a part of this embodiment that is same as the method embodiment and its beneficial effects are omitted herein.

Fig. 5 is a structural diagram of a network device according to an embodiment of the present disclosure. As shown in Fig. 5, the network device includes: a memory 520, a transceiver 500 and a processor 510, wherein, the memory 520 is used for storing a computer program, the transceiver 500 is used for transmitting and receiving data under the control of the processor 510, the processor 510 is used for reading the computer program in the memory 520 to implement following steps:
receiving first information transmitted by a terminal, and obtaining, according to the first information, control information of second partial user information and first partial user information;
receiving, according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

In Fig. 5, a bus architecture may include any number of interconnected buses and bridges, and connects various circuits including one or more processors represented by the processor 510 and memory represented by the memory 520. The bus architecture may also connect various other circuits such as peripherals, voltage regulators and power management circuits, which is well known in the art. Therefore, a detailed description thereof is omitted herein. A bus interface provides an interface. The transceiver 500 may be multiple elements, i.e., a transmitter and a receiver, to allow for communication with various other apparatuses on the transmission medium. These transmission media include wireless channel, wired channel, optic fiber or the like. For different user equipment, the user interface 530 may be an interface capable of externally or internally connecting a required device, and the connected device includes, but is not limited to: a keypad, a display, a speaker, a microphone, a joystick and the like.

The processor 510 is responsible for supervising the bus architecture and normal operation and the memory 520 may store the data being used by the processor 510 during operation.

Optionally, the processor 510 may be a CPU, an ASIC, an FPGA or a CPLD. The processor may also adopt a multi-core architecture.

The processor invokes a computer program stored in the memory and implements any one method provided in the embodiments of the present disclosure according to the obtained executable instructions. The processor and the memory may also be arranged physically separately.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

Optionally, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

Optionally, coding control information of the second partial user information is determined according to third information, and the third information is obtained by performing a third processing on the control information of the second partial user information and/or the first partial user information.

Optionally, the K data transmitting occasions are determined according to fourth information, and the fourth information is obtained by performing a fourth processing on the control information of the second partial user information and/or the first partial user information.

Optionally, the fourth information is a quantity J of resources used by the terminal for transmission, J being greater than or equal to K, and the fourth information is used for indicating that K resources in the J resources are the K data transmitting occasions.

Optionally, the processor 510 is further used for reading the computer program in the memory 520 to implement following step: transmitting access configuration information to the terminal, wherein the access configuration information is used for transmitting at least one of the first information or the second information.

It is noted, the network device according to the embodiment of the present disclosure can implement all method steps implemented by the aforementioned method embodiment, and can achieve the same technical effects. A detailed description of a part of this embodiment that is same as the method embodiment and its beneficial effects are omitted herein.

Fig. 6 is another structural diagram of a terminal according to an embodiment of the present disclosure. As shown in Fig. 6, the terminal 600 includes:
a transmitting unit 601, configured to transmit first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

Optionally, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

Optionally, coding control information of the second partial user information is determined according to third information, and the third information is obtained by performing a third processing on the control information of the second partial user information and/or the first partial user information.

Optionally, the K data transmitting occasions are determined according to fourth information, and the fourth information is obtained by performing a fourth processing on the control information of the second partial user information and/or the first partial user information.

Optionally, the fourth information is a quantity J of resources used by the terminal for transmission, J being greater than or equal to K, and the fourth information is used for indicating that K resources in the J resources are the K data transmitting occasions.

Optionally, the transmitting the second information to the network device includes: transmitting the second information to the network device once or K times.

Optionally, the terminal further includes: a receiving module, configured to receive access configuration information transmitted by the network device, wherein the access configuration information is used for transmitting at least one of the first information or the second information.

It is noted, the terminal according to the embodiment of the present disclosure can implement all method steps implemented by the aforementioned method embodiment, and can achieve the same technical effects. A detailed description of a part of this embodiment that is same as the method embodiment and its beneficial effects are omitted herein.

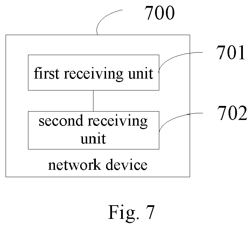

Fig. 7 is another structural diagram of a network device according to an embodiment of the present disclosure. As shown in Fig. 7, the network device 700 includes:
a first receiving unit 701, configured to receive first information transmitted by a terminal, and obtain, according to the first information, control information of second partial user information and first partial user information;
a second receiving unit 702, configured to receive, according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

Optionally, the first partial user information is first partial information in an information combination, the information combination being a combination of user identity information and user data.

Optionally, the control information of the second partial user information includes at least one of: a quantity of repeated transmissions K, resources for repeated transmissions, or a data format of repeated transmissions;
wherein the parameter of the second information includes at least one of: the data format of repeated transmissions, an interleaving mode or K data transmitting occasions, K being equal to the quantity of repeated transmissions.

Optionally, the second partial user information is second partial information in an information combination, the information combination being a combination of user identity information and user data.

Optionally, the first processing includes a first joint coding; and the first processing further includes at least one of: scrambling prior to the first joint coding, adding a cyclic redundancy check (CRC) code prior to the first joint coding, puncturing prior to the first joint coding, or setting a redundancy version (RV) subsequent to the first joint coding.

Optionally, coding control information of the second partial user information is determined according to third information, and the third information is obtained by performing a third processing on the control information of the second partial user information and/or the first partial user information.

Optionally, the K data transmitting occasions are determined according to fourth information, and the fourth information is obtained by performing a fourth processing on the control information of the second partial user information and/or the first partial user information.

Optionally, the fourth information is a quantity J of resources used by the terminal for transmission, J being greater than or equal to K, and the fourth information is used for indicating that K resources in the J resources are the K data transmitting occasions.

Optionally, the network device further includes: a transmitting unit, configured to transmit access configuration information to the terminal, wherein the access configuration information is used for transmitting at least one of the first information or the second information.

It is noted, the network device according to the embodiment of the present disclosure can implement all method steps implemented by the aforementioned method embodiment, and can achieve the same technical effects. A detailed description of a part of this embodiment that is same as the method embodiment and its beneficial effects are omitted herein.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

The present disclosure further provides in an embodiment a processor readable storage medium storing a program instruction, wherein the program instruction is configured to be executed by a processor to implement the information transmission method on the terminal side according to the embodiment of the present disclosure, or implement the information transmission method on the network device side according to the embodiment of the present disclosure.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, electrically programmable ROM (EPROM), electrically erasable programmable ROM (EEPROM), non-volatile memory (NAND FLASH), solid-state drive (SSD)), etc.

A person skilled in the art can understand that embodiments of the present disclosure may be provided as a method, system, or computer program product. Accordingly, the present disclosure may take the form of an entirely hardware embodiment, an entirely software embodiment, or an embodiment combining software and hardware aspects. Furthermore, the present disclosure may take the form of a computer program product configured to be implemented on one or more computer-usable storage media (including but not limited to disk storage, optical storage, etc.) storing computer-usable program codes therein.

The present disclosure is described with reference to flowcharts and/or block diagrams of methods, devices (systems), and computer program products according to the embodiments of the disclosure. It will be understood that each process and/or block in the flowcharts and/or block diagrams, and combinations of processes and/or blocks in the flowcharts and/or block diagrams, can be implemented by computer executable instructions. These computer executable instructions may be provided to the processor of a general-purpose computer, special purpose computer, embedded processor or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable storage capable of directing a computer or other programmable data processing device to operate in a specific manner, such that the instructions stored in the processor-readable storage produce an article of manufacture including instruction means, the instruction means implements the functions specified in one or more processes of the flowchart and/or one or more blocks of the block diagram.

These processor-executable instructions can also be loaded onto a computer or other programmable data processing device, so that a series of operational steps can be performed on the computer or other programmable device to produce a computer-implemented process, the instructions executed on the computer or other programmable devices thus provide steps for realizing the functions specified in one or more processes of the flowchart and/or one or more blocks of the block diagram.

It may be clearly understood by a person skilled in the art that, for ease of description and conciseness, for a detailed working process of the foregoing system, apparatus, and unit, reference may be made to a corresponding process in the foregoing method embodiments, and details are not described herein again.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electric, mechanical, or other forms.

The units described as separate parts may or may not be physically separate, and parts displayed as units may or may not be physical units, that is, may be located in one position, or may be distributed on a plurality of network units. Apart or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

From the foregoing description of the implementations, a person skilled in the art will appreciate clearly that the method according to the embodiments may be implemented not only by software in conjunction with necessary generic hardware platform, but also by hardware, although the former will be preferred in most cases. Based on such an understanding, essential parts, or parts contributing to the related art, of the technical solution of the present disclosure may be implemented in a form of a software product. The computer software product is stored in a storage medium (e.g., a ROM/RAM, a magnetic disk and an optical disc) and includes several instructions adapted to be executed by a terminal (such as a handset, a computer, a server, an air conditioner or a network device) to perform the method according to the embodiments of the present disclosure.

It is understood by a person of ordinary skill in the art that all or a part of the flows of the aforementioned methods may be implemented through hardware controlled by computer programs. The programs may be stored in a computer readable storage medium. The programs, when being executed, may include the flows of the embodiments of the aforementioned methods. Wherein the storage medium may be a magnetic disk, an optic disc, a ROM or a RAM, etc.

It may be understood that these embodiments described in this disclosure may be implemented by hardware, software, firmware, middleware, microcode or a combination thereof. For hardware implementation, a module, unit, sub-unit may be implemented in one or more ASICs, a digital signal processor (DSP), a digital signal processing device (DSP device, DSPD), a programmable logic device (PLD), a field-programmable gate array (FPGA), a general-purpose processor, a controller, a microcontroller, a microprocessor, other electronic unit configured to perform the functions in the present disclosure or a combination thereof.

For a software implementation, the techniques in embodiments of the present disclosure may be implemented by modules (for example, processes, functions or the like) performing the functions described in embodiments of the present disclosure. Software codes may be stored in a memory and executed by a processor. The memory may be implemented internal or external to a processor.

Obviously, modifications and improvements may be made by a person of ordinary skill in the art without departing from the spirit and scope of the present disclosure, and these modifications and improvements shall be encompassed by the present disclosure if the modifications and improvements fall within the scope of the claims of the present disclosure and equivalents thereof.

## Claims

1. An information transmission method, comprising:
transmitting, by a terminal, first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

2. The information transmission method according to claim 1, wherein the first partial user information is first partial information in an information combination, the information combination being a combination of user identity information and user data.

3. The information transmission method according to claim 1, wherein the control information of the second partial user information comprises at least one of: a quantity of repeated transmissions K, resources for repeated transmissions, or a data format of repeated transmissions;
wherein the parameter of the second information comprises at least one of: the data format of repeated transmissions, an interleaving mode or K data transmitting occasions, K being equal to the quantity of repeated transmissions.

4. The information transmission method according to claim 1, wherein the second partial user information is second partial information in an information combination, the information combination being a combination of user identity information and user data.

5. The information transmission method according to claim 1, wherein coding control information of the second partial user information is determined according to third information, and the third information is obtained by performing a third processing on the control information of the second partial user information and/or the first partial user information.

6. The information transmission method according to claim 3, wherein the K data transmitting occasions are determined according to fourth information, and the fourth information is obtained by performing a fourth processing on the control information of the second partial user information and/or the first partial user information.

7. The information transmission method according to claim 6, wherein the fourth information is a quantity J of resources used by the terminal for transmission, J being greater than or equal to K, and the fourth information is used for indicating that K resources in the J resources are the K data transmitting occasions.

8. The information transmission method according to claim 7, wherein the transmitting, by the terminal, the second information to the network device comprises:
transmitting, by the terminal, the second information to the network device once or K times.

9. The information transmission method according to claim 1, further comprising:
receiving, by the terminal, access configuration information transmitted by the network device, wherein the access configuration information is used for transmitting at least one of the first information or the second information.

10. An information transmission method, comprising:
receiving, by a network device, first information transmitted by a terminal, and obtaining, by the network device according to the first information, control information of second partial user information and first partial user information;
receiving, by the network device according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

11. The information transmission method according to claim 10, wherein the first partial user information is first partial information in an information combination, the information combination being a combination of user identity information and user data.

12. The information transmission method according to claim 10, wherein the control information of the second partial user information comprises at least one of: a quantity of repeated transmissions K, resources for repeated transmissions, or a data format of repeated transmissions;
wherein the parameter of the second information comprises at least one of: the data format of repeated transmissions, an interleaving mode or K data transmitting occasions, K being equal to the quantity of repeated transmissions.

13. The information transmission method according to claim 10, wherein the second partial user information is second partial information in an information combination, the information combination being a combination of user identity information and user data.

14. The information transmission method according to claim 10, wherein coding control information of the second partial user information is determined according to third information, and the third information is obtained by performing a third processing on the control information of the second partial user information and/or the first partial user information.

15. The information transmission method according to claim 12, wherein the K data transmitting occasions are determined according to fourth information, and the fourth information is obtained by performing a fourth processing on the control information of the second partial user information and/or the first partial user information.

16. The information transmission method according to claim 15, wherein the fourth information is a quantity J of resources used by the terminal for transmission, J being greater than or equal to K, and the fourth information is used for indicating that K resources in the J resources are the K data transmitting occasions.

17. The information transmission method according to claim 10, further comprising:
transmitting, by the network device, access configuration information to the terminal, wherein the access configuration information is used for transmitting at least one of the first information or the second information.

18. A terminal, comprising a memory, a transceiver and a processor, wherein,
the memory is used for storing a computer program, the transceiver is used for transmitting and receiving data under the control of the processor, the processor is used for reading the computer program in the memory to implement following step:
transmitting first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

19. The terminal according to claim 18, wherein the first partial user information is first partial information in an information combination, the information combination being a combination of user identity information and user data.

20. The terminal according to claim 18, wherein the control information of the second partial user information comprises at least one of: a quantity of repeated transmissions K, resources for repeated transmissions, or a data format of repeated transmissions;
wherein the parameter of the second information comprises at least one of: the data format of repeated transmissions, an interleaving mode or K data transmitting occasions, K being equal to the quantity of repeated transmissions.

21. The terminal according to claim 18, wherein the second partial user information is second partial information in an information combination, the information combination being a combination of user identity information and user data.

22. A network device, comprising a memory, a transceiver and a processor, wherein,
the memory is used for storing a computer program, the transceiver is used for transmitting and receiving data under the control of the processor, the processor is used for reading the computer program in the memory to implement following steps:
receiving first information transmitted by a terminal, and obtaining, according to the first information, control information of second partial user information and first partial user information;
receiving, according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

23. The network device according to claim 22, wherein the first partial user information is first partial information in an information combination, the information combination being a combination of user identity information and user data.

24. The network device according to claim 22, wherein the control information of the second partial user information comprises at least one of: a quantity of repeated transmissions K, resources for repeated transmissions, or a data format of repeated transmissions;
wherein the parameter of the second information comprises at least one of: the data format of repeated transmissions, an interleaving mode or K data transmitting occasions, K being equal to the quantity of repeated transmissions.

25. The network device according to claim 22, wherein the second partial user information is second partial information in an information combination, the information combination being a combination of user identity information and user data.

26. A terminal, comprising:
a transmitting unit, configured to transmit first information and second information to a network device;
wherein the first information is obtained by performing a first processing on control information of second partial user information and first partial user information;
the second information is information obtained by performing a second processing on the second partial user information, and a parameter of the second information is determined according to the control information of the second partial user information and/or the first partial user information.

27. The terminal according to claim 26, wherein the first partial user information is first partial information in an information combination, the information combination being a combination of user identity information and user data.

28. A network device, comprising:
a first receiving unit, configured to receive first information transmitted by a terminal, and obtain, according to the first information, control information of second partial user information and first partial user information;
a second receiving unit, configured to receive, according to the control information of the second partial user information and the first partial user information, second information transmitted by the terminal;
wherein the first information is obtained by performing a first processing on the control information of the second partial user information and the first partial user information;
the second information is information obtained by performing a second processing on the second partial user information, and a parameter of the second information is determined according to the control information of the second partial user information and/or the first partial user information.

29. The network device according to claim 28, wherein the first partial user information is first partial information in an information combination, the information combination being a combination of user identity information and user data.

30. A processor readable storage medium storing a computer program, wherein the computer program is configured to be executed by a processor, to implement the information transmission method according to any one of claims 1 to 9, or implement the information transmission method according to any one of claims 10 to 17.
